(19) Europäisches Patentamt
European Patent Office
Office européen des brevets

(11) Publication number : **0 560 508 A1**

# (12) EUROPEAN PATENT APPLICATION

(21) Application number : **93301355.9**

(22) Date of filing : **24.02.93**

(51) Int. Cl.$^5$ : **C08J 7/04,** C09D 5/02, C09D 133/00, C09D 167/00, C09D 175/04

(30) Priority : **11.03.92 GB 9205309**
**26.11.92 GB 9224741**

(43) Date of publication of application :
**15.09.93 Bulletin 93/37**

(84) Designated Contracting States :
**BE DE ES FR GB IT NL SE**

(71) Applicant : **ZENECA RESINS BV**
**Sluisweg 12, P.O. Box 123**
**NL-5140 AC Waalwijk (NL)**

(72) Inventor : **Lear, Peter**
**12 Moss Bank**
**Chester, Cheshire (GB)**
Inventor : **Overbeek, Gerardus Cornelis**
**Koolmees 6**
**NL-5161 SZ Sprang-Kapelle (NL)**
Inventor : **Buckmann, Alfred Jean Paul**
**Karrenstraat 51**
**NL-5211 EH 's-Hertogenbosch (NL)**

(74) Representative : **Sheller, Alan**
**ICI Group Patents Services Dept. PO Box 6**
**Shire Park Bessemer Road**
**Welwyn Garden City, Herts, AL7 1HD (GB)**

## (54) Aqueous coating compositions.

(57) Coating composition for a polyolefine, particularly a polypropylene, substrate comprising an aqueous emulsion or solution of a polymer system comprising at least one polymer P which imparts polyolefine-adherability to the coating derived from the composition and which is a polymer derived from a monomer system comprising a defined level of a monomer bearing an optionally substituted 7,7-dimethyl norbornanyl group - particularly isobornyl acrylate.

EP 0 560 508 A1

The present invention relates to a coating composition for application to a polyolefine substrate and particularly to a polypropylene substrate.

The use of polypropylene, either as the pure plastics material or in a rubber-toughened form, has become widespread for a large number of applications because of the excellent general properties of the material coupled with its relatively low price compared with other structural materials of equivalent performance. In particular, polypropylene has become the polymer of choice in the manufacture of various external and internal automobile parts, such as bumpers, side mirror supports, interior panels and door handles. When employing such polypropylene articles, it is often desirable to overcoat the basic substrate to achieve, for example, a protective and/or decorative coating, such as a paint coating, or an adhesive coating for subsequent bonding to another substrate.

Unfortunately, because polypropylene possesses a low surface tension (making initial film-formation thereon difficult) and a low polarity, it is difficult to ensure that an applied coating (derived from a coating composition) adheres effectively to the surface of the polypropylene article.

One approach that has been employed for solving this problem has been to apply a physical treatment, such as an electrical discharge, to the polypropylene so as to provide a polar surface. However, this technique tends to cause a deterioration in bulk physical properties.

Another approach has been to employ solvent-borne chlorinated polyolefines's (CPO's) to prime the polypropylene, the CPO being used alone or in conjunction with a filmogenic polymer, such as an acrylic polymer or a urethane polymer, in the primer paint composition. CPO's will in fact adhere effectively to a polypropylene surface providing the level of chlorination therein is not too high; the presence of chlorine is necessary to allow solubility in the commonly used paint solvents such as toluene and xylene. Nevertheless, the use of CPO's suffers from a number of disadvantages: the CPO is poorly compatible with common filmogenic polymers such as acrylics and urethanes so that unwanted separation of the components of the primer composition occurs on storage; the CPO has poor outdoor durability; there is a tendency for the CPO to redissolve in the solvents of additionally applied coatings, causing delamination; there is an occasional tendency for the CPO to dehydrochlorinate; the use of solvent-borne CPO is enviromentally unsound due to the solvent; and the presence of chlorine in the CPO precludes its use in applications where food is involved, eg. as in the adherence of aluminium foil tops to polypropylene yoghurt cups.

In GB 1109746 there is described, in a further approach, a process for altering the surface characteristics of polyolefine substrates, such as polypropylene substrates, so as to make them more adherable to subsequently applied coatings. This is effected by applying to the polyolefine surface an adherent coating of a homo- or copolymer of a bicyclic terpene acrylic ester or acrylamide, with isobornyl acrylate and isobornyl acrylamide homo- and copolymers being particularly exemplified. Nevertheless, in the teaching of GB 1109746 the defined terpenoid polymers are applied to the substrate as organic solvent solutions, and there is no indication therein that it might be possible to employ at least certain types of such polymers in an effective water-borne coating composition so as to avoid the environmentally harmful use of substantial quantities of organic solvents without detracting from adhesion performance.

We have now discovered that it is in fact possible to prepare certain water-borne coating compositions comprising certain terpenoid polymers of the type exemplified in GB 1109746 which are highly effective having regard to adhesion performance on polyolefine and particularly polypropylene substrates, and yet do not incorporate environmentally harmful quantities of organic solvent.

According to the present invention there is provided an aqueous coating composition suitable for application to a polyolefine substrate, which coating composition comprises an aqueous emulsion or solution of a polymer system comprising at least one polymer P which polymer system imparts polyolefine-adherability to a coating derived from the composition, wherein said polymer P is a polymer derived from a monomer system comprising at least one polymerisable monomer bearing an optionally substituted 7,7-dimethyl norbornanyl group where the amount of such a monomer(s) used for the preparation of said polymer P is within the range of from 5 to 100% by weight, based on the weight of all the monomer(s) used in the preparation of said polymer P, provided that the amount of such a monomer(s) based on the weight of all the monomers used for the preparation of said polymer system is within the range of 5 to 80% by weight.

For the purposes of this invention an aqueous emulsion or solution of the polymer system comprising at least one polymer P (essential component of the invention coating composition) means an emulsion or solution of the polymer system in an aqueous medium of which water is the principle component (at least 50% by weight of the aqueous carrier medium, usually at least 80% by weight). (An alternative term for an emulsion of the polymer system term is a latex of the polymer system). For the sake of clarity, the non-settling aqueous dispersions obtained from dispersing polyurethanes into water are intended to be within the scope of the term aqueous emulsion.

The polymer system can either be dispersed in the aqueous medium in the form of an aqueous emulsion

or in the form of an aqueous solution. Further, in some cases, the polymer system may have been prepared by the polymerisation to form an aqueous emulsion of one polymer in the presence of an aqueous solution of another polymer, in which case the resulting polymer system is found to be dispersed as an aqueous emulsion, and is deemed as such for the purposes of the invention.

Small amounts of organic liquids may optionally be present in the aqueous emulsion or solution.

The critical feature of said at least one polymer P is that it is a polymer derived from a monomer system comprising at least one polymerisable monomer bearing as a substituent a group having the basic structure of an optionally substituted 7,7-dimethyl norbonanyl group and is used at a level as defined supra.

For the sake of clarity, we mean by an optionally substituted 7,7-dimethyl norbornanyl group a group derived from optionally substituted 7,7-dimethyl-norbornane by the notional removal of a hydrogen atom from one of the carbon atoms of the six-membered ring - or in other words the univalent group of basic structural formula:

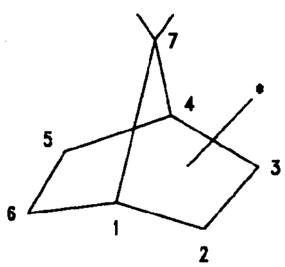

where the valence bond denoted by * is derived by the notional removal of any one of the hydrogen atoms of the the six-membered ring (carbon atoms 1, 2, 3, 4, 5, 6) but particularly one of those attached to carbon atoms 2, 3, 5 or 6, and which group includes substituted groups of this basic structure type, particularly those having monosubstitution (eg by alkyl groups like methyl or ethyl, and hydroxyl or chloro groups) at the 1 and/or 4 positions, such as isoborn-2-yl and born-2-yl groups of formulae:

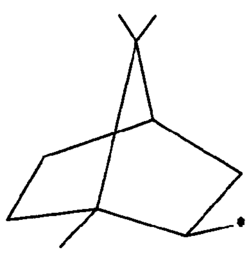

Isobornyl

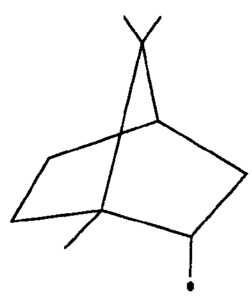

bornyl

* Valence bond

For the sake of convenience, such an optionally substituted 7,7-dimethyl norbornanyl group will be generally referred to in this specification by the abbreviation ONB.

The precise nature of a polymer P used in the invention (in the sense of the type of polymerisation reaction process or reaction mechanism used in its formation) is not critical and can in principle be any polymer of the filmogenic type. Such a polymer P could for example be produced by free-radical addition polymerisation, non-free-radical addition polymerisation, or condensation polymerisation. Examples of such polymers include addition polymers of olefinically unsaturated monomers (particularly acrylic polymers), urethane polymers (including polymers with urea as well as urethane linkages), and polyester polymers; blends of such different polymers P may also be used (e.g. urethane polymer/acrylic polymer blends). Each such polymer will of course have been produced by homo- or copolymerisation of a monomer bearing an ONB group as defined.

A polymer P is often a free-radical addition polymer of one or more olefinically unsaturated monomers, at least one of which being an olefinically unsaturated monomer bearing an ONB group.

Such an olefinically unsaturated norbornanyl-type monomer is preferably a monomer of formula

$$H_2C = CR^1 - \overset{\overset{O}{\|}}{C} - XT$$

where $R^1$ is H or lower alkyl of up to 8 carbon atoms (preferably methyl), X is -O- (ester link) or -NH- (amide link), and T is the above defined ONB group.

In particular, such an olefinically unsaturated monomer is selected from isobornyl acrylate, isobornyl methacrylate, isobornyl acrylamide and isobornyl methacrylamide.

Techniques for making such olefinically unsaturated monomers which include a substituent having the basic structure of an optionally substituted 7,7-dimethyl norbornanyl group are described in GB 1109746, reference to which is incorporated herein.

The polymer P may be a homopolymer of such an olefinically unsaturated monomer or a copolymer of two or more such monomers, or it may be a copolymer of one or more such monomers with other types of monomer(s) not bearing a defined ONB group, the level of monomer(s) bearing an ONB group in the monomer system used to make the polymer P being within the range of 5 to 100 weight %, based on the total weight of monomer(s) used for the preparation of P, preferably 50 to 100 weight %. The level of such other types of monomer (i.e. not bearing an ONB group) in the monomer system used for the preparation of polymer P will correspondingly be within the range of from 0 to 95 weight %, preferably 0 to 50 weight %, of the monomer system used. Examples of suitable other such monomers include conjugated dienes; styrene or substituted styrenes; vinyl halides such as vinylidene chloride and vinyl chloride, olefinically unsaturated acids anhydrides, or amides; vinyl esters; vinyl ethers, vinyl ketones; olefinically unsaturated nitriles; heterocyclic vinyl compounds; and esters of acrylic acid and methacrylic acid of formula:

$$CH_2 = CR^2COOR^3$$

where $R^2$ is H or methyl and $R^3$ is optionally substituted (eg optionally halo, or hydroxy or alkoxysilyl substituted) alkyl (including cycloalkyl except for ONB) of 1 to 20 carbon atoms (more preferably 1 to 8 carbon atoms). More specific examples of such monomers include acids and anhydrides such as acrylic acid, methacrylic acid, β-carboxyethyl acrylate, fumaric acid, and maleic anhydride; (chloro) alkyl esters such as methyl acrylate, ethyl acrylate, n-propyl acrylate n-butyl acrylate, isobutyl acrylate, t-butyl acrylate, n-octyl acrylate, 2-ethylhexyl acrylate, lauryl acrylate, isopropyl acrylate, methyl α-chloroacrylate, ethyl-α-chloroacrylate, n-propyl α-chloroacrylate, n-butyl α-chloroacrylate, β-chloroethyl acrylate, β-chloropropyl acrylate, β-chlorobutyl acrylate, fluorinated acrylates and methacrylates (such as the fluoro analogues of the above chloroacrylates), methyl methacrylate, ethyl methacrylate, n-propyl methacrylate, isopropyl methacrylate, n-butyl methacrylate, isobutyl methacrylate, t-butyl methacrylate, 2-ethylhexyl methacrylate, n-octyl methacrylate, lauryl methacrylate, diethyl maleate, diethyl fumarate, hydroxyethyl acrylate, hydroxyethyl methacrylate, trimethoxysilylpropyl methacrylate; vinyl esters such as allyl acetate, allylchloroacetate, methallyl acetate, vinyl acetate, isopropenyl acetate, vinyl decanoate and vinyl nonanoate; halides such as vinyl chloride, vinylidene chloride, allyl chloride, 1,2-dichloropropene-2, methallyl chloride and trichloroethylene; nitriles such as acrylontrile and methacrylonitrile; aryls such as styrene,o-methyl styrene, m-methyl styrene, p-methyl styrene, pentachlorostyrene, o-chlorostyrene, m-chlorostyrene, p-chlorostyrene, m-bromostyrene, p-bromostyrene, 2.5-dichlorostyrene, p-dimethylaminostyrene, p-methoxy-styrene and p-cyanostyrene; conjugated dienes or chlorodienes such as butadiene and chloroprene; vinyl-substituted heterocyclic imines such as 2-vinylpyridine and vinyl carbazole; and vinyl ketones such as methyl vinyl ketone.

Where P is a non-free-radical addition polymer or a condensation polymer, any suitable polymerisation process may be used for its preparation. For example, as is well known, polyurethane addition polymers are generally made by reacting an organic polyisocyanate(s) with an organic compound(s) containing isocyanate-reactive groups, particularly a macropolyol with the optional inclusion of a low molecular weight organic polyol. A favoured route to their formation involves the formation of an isocyanate-terminated prepolymer (usually in bulk or in the presence of an organic liquid) followed by chain extension with an active-hydrogen-containing compound. A polyurethane polymer bearing ONB groups could be prepared e.g. by using a polyol or monohydroxy monomer reactant in the prepolymer synthesis which bears an ONB group. For example, using a monohydroxy compound bearing an ONB group, such as isoborneol (or borneol), would result in urethane chains having terminal ONB groups.

The actual polymerisation techniques employed to prepare a polymer P are usually quite conventional and need not be discussed in very great detail here.

For example an aqueous emulsion of a free-radical addition polymer P can be prepared using any suitable free-radical- initiated aqueous emulsion polymerisation process, using a free-radical initiator and (usually) appropriate heating (e.g. 40 to 120°C) being employed. The aqueous emulsion polymerisation can be effected

with conventional dispersants being used [e.g. anionic and/or non-ionic emulsifiers such as Na salts of dialkylsulphosuccinates, Na salts of sulphated oils, Na salts of alkyl sulphonic acids, Na, K and ammonium alkyl sulphates, alkali metal salts of sulphonic acids. C12-24 fatty alcohols, ethoxylated fatty acids and/or fatty amides, and Na salts of fatty acids such as Na stearate and Na oleate; the amount used is usually 0.2 to 5% by weight based on the weight of total monomer(s) charged] and can employ conventional free radical initiators [eg hydrogen peroxide, t-butyl- hydroperoxide, cumene hydroperoxide, persulphates such as NH4 persulphate, K persulphate and Na persulphate; redox system may be used; the amount is generally 0.05 to 3% based on the weight of total monomers charged].

Aqueous solutions of such polymers could be made e.g. by incorporating an appropriate level of an acid bearing monomer (e.g. acrylic acid or methacrylic acid) as part of the monomer system used in the free-radical addition emulsion polymerisation (to form an emulsion of the polymer) and then neutralising the acid groups so incorporated into the polymer with a base (such as ammonia) such that the dispersed latex particles pass into solution.

Aqueous emulsions of a polyurethane polymer P can be made using any suitable technique. In one such technique, the prepolymer (usually prepared in bulk or in the presence of organic liquid) includes ionic (anionic or cationic) groups such as carboxylate (introduced eg during the reaction to form the prepolymer using an appropriately functionalised organic compound having isocyanate-reactive groups) and can be dispersed into water containing the chain-extender (for example hydrazine or a di- or polyamine), and the result is an aqueous emulsion of the final polyurethane.

The aqueous composition of the invention may comprise a polymer system in which said at least one polymer P (as defined supra) is the only polymer(s) in the polymer system. In a further embodiment of the invention, however, the aqueous composition comprises a polymer system which also includes at least one polymer Q which is not a polymer P as defined, i.e. is derived a monomer system having a level of a polymerisable monomer bearing an optionally substituted 7,7-dimethyl norbornanyl group (ONB group) which is less than 5% by weight, more usually 0% by weight, based on the weight of the monomers used for the preparation of the polymer. Such a polymer Q could thus, if desired be prepared from a monomer system which has only a very small amount of a monomer(s) bearing an ONB group as defined (less than 5 weight % based on the monomers used), but more usually Q will be derived from a monomer system which has no monomer at all bearing an ONB group. An emulsion or solution of both types of polymers for the invention composition may be made by simply blending preformed aqueous emulsions of solutions of polymers P and Q. More advantageously, however, an emulsion is prepared by polymerising the monomer(s) to form polymer P (so as to achieve an aqueous emulsion thereof) in the presence of an aqueous emulsion or solution of performed polymer Q, or, conversely, an emulsion is prepared by polymerising the monomer(s) to form polymer Q (so as to achieve an aqueous emulsion thereof) in the presence of an aqueous emulsion or solution of preformed polymer P. Such systems may be prepared using a sequential polymerisation process in which the monomer(s) for one type of polymer (P or Q) is (are) polymerised, followed by the polymerisation in the same reaction medium of the monomer(s) to form the other type of polymer (P or Q). Of course, in such sequential polymerisations there may be a small overlap of polymerising monomers if the two types of polymers have been prepared by similar processes (e.g. both by free-radical addition polymerisations) - e.g. some of the monomer(s) to form P (say) may still be present (after making P) when the monomer(s) to make Q is (are) polymerised, or vice versa.

The precise nature of a polymer Q is not critical and can be any polymer of the filmogenic type, although it should not be a polymer as defined for polymer P. Such a polymer Q could eg be produced by free-radical addition polymerisation, non-free-radical addition polymerisation, or condensation polymerisation. Examples of such polymers include addition polymers of olefinically unsaturated monomers (particularly acrylic polymers), urethane polymers (including polymers with urea as well as urethane linkages), and polyester polymers; blends of such polymers can also be used.

A polymer Q is often a free-radical addition polymer of one or more olefinically unsaturated monomers. Examples of such monomers include conjugated dienes; styrene or substantial styrenes; vinyl halides such as vinylidene chloride and vinyl chloride, olefinically unsaturated acids anhydrides, or amides; vinyl esters; vinyl ethers, vinyl ketones; olefinically unsaturated nitriles; heterocyclic vinyl compounds; and esters of acrylic acid and methacrylic acid of formula:

$$CH_2 = CR^2COOR^3$$

where $R^2$ is H or methyl and $R^3$ is optionally substituted (eg optionally halo or hydroxy or alkoxysilyl substituted) alkyl (including cycloalkyl except for ONB) of 1 to 20 carbon atoms (more preferably 1 to 8 carbon atoms). More specific examples of such monomers include acids and anhydrides such as acrylic acid, methacrylic acid, β-carboxyethyl acrylate, fumaric acid; and maleic anhydride; (chloro) alkyl esters such as methyl acrylate, ethyl acrylate, n-propyl acrylate n-butyl acrylate, isobutyl acrylate, t-butyl acrylate, n-octyl acrylate, 2-ethylhexyl acrylate, lauryl acrylate, isopropyl acrylate, methyl α-chloroacrylate, ethyl α-chloroacrylate, n-propyl α-chlor-

oacrylate, n-butyl α-chloroacrylate, β-chloroethyl acrylate, β-chloropropyl acrylate, β-chlorobutyl acrylate, fluorinated acrylates and methacrylates (such as the fluoro analogues of the above chloroacrylates), methyl methacrylate, ethyl methacrylate, n-propyl methacrylate, isopropyl methacrylate, n-butyl, methacrylate, isobutyl methacrylate, t-butyl methacrylate, 2-ethylhexyl methacrylate, n-octyl methacrylate, lauryl methacrylate, diethyl maleate, diethyl fumarate, hydroxyethyl acrylate, hydroxyethyl methacrylate, trimethoxysilylpropyl methacrylate; vinyl esters such as allyl acetate, allylchloroacetate, methallyl acetate, vinyl acetate, isopropenyl acetate, vinyl decanoate, and vinyl nonanoate; halides such as vinyl chloride, vinylidene chloride, allyl chloride, 1,2-dichloropropene-2, methallyl chloride and trichloroethylene; nitriles such as acrylontrile and methacrylonitrile; aryls such as styrene,o-methyl styrene, m-methyl styrene, p-methyl styrene, pentachlorostyrene, o-chlorostyrene, m-chlorostyrene, p-chlorostyrene, m-bromostyrene, p-bromostyrene, 2.5-dichlorostyrene, p-dimethylaminostyrene, p-methoxy-styrene and p-cyanostyrene; conjugated dienes or chlorodienes such as butadiene and chloroprene, vinyl-substituted heterocyclic imines such as 2-vinylpyridine and vinyl carbazole; and vinyl ketones such as methyl vinyl ketone. Very small amounts of OBN-bearing monomer can be used (as defined supra) but this is not usual, and normally no such monomer is used.

A free-radical polymer Q, may, for example, be a copolymer based on vinylidene chloride and one or more (meth)acrylate esters (as exemplified above, optionally with an unsaturated acid such as acrylic or methacrylic acid) or an "all-acrylic" polymer derived only from one or more of such (meth)acrylate esters (optionally with an unsaturated acid such as acrylic or methacrylic acid).

Where a composition according to the invention does include at least one polymer Q as well as at least one polymer P, it is preferred that the levels of P and Q polymers are present in a weight ratio (dry) of Q to P within the range of from 20/80 to 95/5, more preferably 50/50 to 95/5.

The actual polymerisation techniques employed to prepare a polymer Q are, again, usually quite conventional and reference can be made to the above discussion of the techniques employed for making a polymer P.

The minimum level of ONB group-containing monomer(s) used in the preparation of the polymer system of the invention composition should be 5 weight % based on the weight of all the monomers used for the preparation of the polymer system, i.e. the monomer(s) used for making polymer(s) P and, if present, polymer(s) Q, in order to impart acceptable pololefine-adherability to a coating which is derived from the composition. The upper level of ONB group-containing monomer(s) used in the preparation of the polymer system of the invention composition is 80 weight %, based on the weight of all the monomers used in the formation of the polymer system. This is because we have found it very difficult to reproducibly prepare aqueous emulsions or solutions of such polymer systems of acceptably high polymer solids content derived from monomer systems containing more than about 80 weight % of ONB group-containing monomer(s). For example when making a polymer P from a monomer system containing more than about 80% by weight of an OBN group-bearing monomer (based on the weight of all monomer(s) used in the preparation of P), unless a very low solids content in the aqueous medium is aimed for (e.g. below about 15 weight % although this is difficult to predict exactly) unwanted flocculation (coagulation) often occurs due (we believe) to the highly hydrophobic nature of such monomer, making the system not commercially useful. A polymer system according to the invention may, nevertheless, be prepared which incorporates a polymer P derived from a monomer system containing more than 80% by weight of ONB group-containing monomer(s) (based on the total of monomer(s) used in the preparation of P) provided the aqueous medium in which it is formed has appropriately low solids content (so as not to result in flocculation) and a polymer Q is also incorporated (and/or another polymer P derived from a monomer system containing less than 80% by weight of ONB group - containing monomer(s))so as to bring the overall level of ONB group-containing monomer(s) used to be within the range 5-80 weight % which will enable one to increase the solids content of the aqueous system to more acceptable levels without the liklihood of flocculate formation. It therefore follows that a monomer system used to prepare a polymer P should not incorporate an ONB group-bearing monomer at a level of above 80 weight % (based on the weight of all the monomeric material used in the preparation of polymer P) unless an appropriate amount of a polymer(s) Q (and/or another polymer P derived from a monomer system containing less than 80% by weight of ONB group - containing monomer(s)) is also present as part of the polymer system so as to bring the overall level ONB group-containing monomer(s) employed to within the required range of 5 to 80 weight % based on the weight of all the monomers used in the formation of the polymer system of the invention composition. In other words, if a polymer P is the only polymer of the polymer system (no polymer Q or other polymer P being present) it should be derived from a monomer system in which the level of ONB group-containing monomer(s) is within the range of from 5 to 80 % by weight (based on the weight of all monomer(s) used in the preparation of P).

Preferably the level of ONB group-bearing monomer(s) is within the range of from to 5 to 50% by weight, based on the weight of all monomers used in the preparation of the polymer system, and more preferably 10 to 35% by weight.

The number average molecular weight Mn of both polymer P and (if present) polymer Q is typically within the range of from 4,000 to 3,000,000 or over.

It may be noted here that it was by no means predictable that, as a corollary of the teaching of GB 1109746, aqueous-based compositions based on polymerised ONB group-containing monomers as defined according to the present invention could be considered as a commercially viable proposition or that such compositions would provide coatings with excellent adhesion to polyolefine, particularly polypropylene, substrates. The preferred terpene acrylic polymers employed in the solvent-based compositions of GB 1109746 are either homopolymers of terpene acrylic monomers or copolymers which preferably incorporate up to a very high level of the terpene acrylic monomer, the upper ratio of terpene acrylic monomer to other monomer(s) in such preferred copolymers being 20/1. When it comes to preparing aqueous-based compositions based on polymers derived from ONB group-bearing monomers however, the present invention requires (as mentioned above) that one employs monomer systems having not more than 80 weight % of ONB group-containing monomer(s). In spite of this, we have found that excellent adhesion to polyolefine (particularly polypropylene) substrates of the resulting coatings is still achieved at these lower levels. Indeed, lower levels of ONB group-containing monomers in the polymer systems are actually preferred - with a level of 5 to 50 weight %, and more particularly 10 to 35 weight % of ONB group- containing monomer (based on the total of all monomers used for the preparation of the polymer system) being preferred. This is most surprising in view of the teaching of GB 1109746 to employ terpene acrylic homopolymers or high levels of terpene acrylic monomer in copolymers for the solvent-based coating compositions thereof - and we have in fact found that, contrary to expectation, for the water-based coating compositions of the present invention, the level of ONB group-containing monomer required to produce excellent adhesion to a polyolefine substrate is far less than that required in solvent-based compositions. Put another way, at a given level of ONB group-containing comonomer(s) in the monomer(s) for making the polymer system according to the invention, the adhesion to polyolefine achieved with the water-based compositions of the present invention is significantly better than that achieved with a corresponding solvent-based composition based on the same polymer system. Such a discovery is all the more surprising in view of the fact that one would have expected the solvent-based system to provide superior adhesion to polypropylene substrates since it would be expected that solvents such as xylene and toluene (as used in the examples of GB 1109746) would swell the amorphous regions of the polypropylene so that a polymer dissolved in the solvent would thus be able to penetrate into these amorphous regions, causing chain entanglement and hence promoting adhesion. Such a mechanism for promoting adhesion is not of course possible in the water-based compositions of the present invention.

The aqueous composition of the invention may, as explained supra, be readily applied to an untreated polypropylene substrate (homo or copolymer), although this does not of course preclude it being applied to a substrate that has been treated. It may also be applied to substrates made from blends of polypropylene with other polymers such as poly( ethylene/propylene/diene), polyphenylene sulphide, polyphenylene oxide etc. The substrate may e.g. be in the form of a moulded or extruded article or film. Films of polypropylene are often in oriented form.

The coating composition may be employed to provide a decorative or protective coating in its own right, or may be employed to provide a primer coating prior to the application of one or more further coatings (e.g. paint coatings or adhesive coatings). For such purposes it may be used "as is" or further diluted with water and/or organic solvent(s), or it may be supplied in more concentrated form by evaporation of water and/or organic components of the liquid medium. The coating composition may be applied to a polypropylene substrate by any conventional method, including brushing, dipping, flow coating, spraying, spreading with a knife or rod or roller, and the like. The coating is normally formed by application of the coating composition to the substrate, and removing the aqueous carrier phase (eg by natural or accelerated drying) to form the film coating.

It is apparent that the coating composition of the present invention need not contain any organic solvent material or any chlorine-containing polymer, thereby overcoming some of the previously-discussed disadvantages of the prior art. Of course, solvent and chloropolymers may be employed to a greater or lesser degree should this be acceptable or desirable, i.e. the invention is sufficiently flexible to accommodate the presence or absence of such materials.

The aqueous emulsion or solution of the coating composition of the invention typically has a polymer solids content of from about 15% to 70% by weight, more usually 15% to 60% by weight (based on the total weight of aqueous emulsion or solution).

The composition of the invention may include, or be subsequently formulated with, various other ingredients. For example, it may if desired include, or subsequently be formulated with, ingredients commonly employed in film-forming coating formulations such as defoamers, rheology control agents, thickeners, dispersing and stabilizing agents (usually surfactants), wetting agents, fillers, extenders, fungicides, coalescing solvents, wetting solvents, plasticisers, anti-freeze agents and pigments. For many applications, it is envisaged that the

composition will be in the form of, or will subsequently be used in a formulation to provide, a paint, and will therefore include materials commonly employed in paint formulations, such as pigments and other ingredients where appropriate (extenders, stabilisers, thickeners, coalescing solvents, defoamers, surfactants, and so on).

The present invention is now illustrated by reference to the following examples. Unless otherwise specified, all parts, percentages and ratios are on a weight basis.

In the examples, coating compositions according to the invention (all flocculate free) were coated onto pure polypropylene (homopolymer) plaques of 2 mm thick stereoregular polypropylene.

The polyproplyene plaques were all degreased prior to coating by wiping with a tissue soaked in a 1:1 mixture of isopropyl alcohol and constant boiling gasoline 80-110°C fraction. The samples of the coating compositions were sometimes affixed (if necessary) with wetting solvent (eg xylene or cyclohexane) to achieve appropriate wetting behaviour.

Film coatings were applied by a wire-wound rod such that the dry coating thickness was between 35 and 45 μm. The coated plaques were baked in an oven at 80°C for 30 minutes and left to cool for about 14 hours before testing for coating adhesion.

The following method of assessing adhesion was employed in these examples.

Gitterschnitt Test (DIN No. 53151 or ASTM D-3359B)

The coating is crosshatched with a sharp knife so as to produce squares approximately 1mm x 1mm. A standard cellulosic tape is firmly and uniformly applied over the crosshatched area and then firmly pulled away at an angle of 180°C to the substrate surface. The crosshatch is examined to assess how much coating has been pulled away, and a rating awarded as follows.

GT-O The crosshatched coating is completely free from damage.
GT-1 5% of the coating has been pulled away.
GT-2 15% of the coating has been pulled away.
GT-3 35% of the coating has been pulled away.
GT-4 65% of the coating has been pulled away.
GT-5 complete loss of the coating.

(The words Fluorad, Desmodur, Antorox, Akyporox, Atlas, Surfagene and Joncryl referred to in the Examples are believed to be registered trade marks).

Examples 1 to 3

Coating compositions according to the invention (Examples 1 to 3) were prepared according to the following recipes in which an aqueous emulsion of a polymer P of the olefinic free radical addition type is prepared in the presence of a preformed aqueous emulsion of a polymer Q also of the free-radical olefinic addition type (in fact an acrylic polymer).

| No. | Component | Example 1 | Example 2 | Example 3 |
|---|---|---|---|---|
| | | Weight in grams | | |
| 1 | $H_2O$ (demin) | 571.6 | 571.6 | 571.6 |
| 2 | Sodium lauryl sulphate* | 30.0 | 30.0 | 30.0 |
| 3 | Ammonium persulphate | 3.0 | 3.0 | 3.0 |
| 4 | n-Butyl acrylate | 135.9 | 120.0 | 136.0 |
| 5 | n-Butyl methacrylate | 285.3 | 366.8 | 324.9 |
| 6 | "Fluorad" FX-189 + | 2.4 | - | - |
| 7 | Acrylic acid | 16.8 | 14.7 | 18.9 |
| 8 | Isobornyl acrylate | 118.2 | 178.2 | 59.4 |
| 9 | "Fluorad" FX-189 + | 0.6 | - | - |
| 10 | Acrylic acid | 1.2 | 1.8 | 0.6 |
| 11 | $H_2O$ (demin) | 50.0 | 50.0 | 50.0 |
| 12 | Cumene hydroperoxide # | 1.5 | 1.5 | 1.5 |
| 13 | Isoascorbic acid | 1.2 | 1.2 | 1.2 |
| 14 | $H_2O$ (demin) | 10.8 | 10.8 | 10.8 |

* As a 30% solution in water.

\+ Fluoroacrylate monomer from 3M Corp.

\# 80% solution in water.

I Place 1, 2, 3 in a reactor equipped with stirrer, baffles, condenser and thermometer.

II Blend 4, 5, 6, 7 in a feed tank and add 10% of this mixture to the reactor.

III Raise the reactor contents to 88°C ± 2°C and begin a steady addition of 4, 5, 6, 7 so that addition is complete after 60 minutes. [The result is a polymer Q aqueous emulsion].

IV Begin the addition of a blend of 8, 9, 10 and feed at a rate such that addition is complete after 45 minutes.

V Maintain temperature at 88°C and add 11 and 12.

VI Dissolve 13 in 14 and add dropwise to the reactor over 15 minutes.

VII After a further 45 minutes at 88°C [to form a polymer P] cool and sieve the resulting aqueous emulsion (solids content ca. 457 in all three examples) of polymers Q and P to remove oversize material.

The aqueous coating compositions of Examples 1 to 3 were applied to polypropylene plaques as described supra and the adhesion tests carried out - with the following results:

| | Example 1 | Example 2 | Example 3 |
|---|---|---|---|
| Gitterschnitt | Gt-0 | Gt-0 | Gt-0 |

Example 4

A coating composition according to the invention was prepared according to the following recipe in which an aqueous emulsion of an olefinic free-radical addition type polymer Q (in fact an acrylic polymer) is prepared in the presence of a preformed polymer P, also of the olefinic free-radical addition type.

| No | Component | Weight (gms) |
|---|---|---|
| 1 | Demin water | 996.7 |
| 2 | Sodium lauryl sulphate | 33.3 |
| 3 | Ammonium persulphate | 3.3 |
| 4 | Isobornyl acrylate | 132.0 |
| 5 | Acrylic acid | 1.3 |
| 6 | Isobutyl acrylate | 400.0 |
| 7 | Styrene | 117.4 |
| 8 | Acrylic acid | 16.0 |

I Dissolve 2 and 3 in 1 in a suitable flask.
II Add 10% of 4 and 5 to the flask and raise the temperature to 88°C.
III Feed the rest of 4 and 5 over 30 minutes.
IV Add 6, 7 8 over 60 minutes.
V Maintain temperature for a further 30 minutes before cooling. Solids content is about 40%.

After addition of suitable wetting solvent a 75 μm wet coating on a pure polypropylene plaque was oven dried at 80°C for 30 minutes. After cooling, adhesion was assessed as Gt-0.

Example 5

A coating composition according to the invention was prepared according to the following recipe in which an aqueous emulsion of only a single polymer P (olefinic free-radical addition type) is made (i.e. no polymer Q being present).

| No | Component | Weight (gms) |
|---|---|---|
| 1 | Water | 996.7 |
| 2 | Sodium lauryl sulphate | 33.3 |
| 3 | Ammonium persulphate | 3.3 |
| 4 | Isobornyl acrylate | 533.3 |
| 5 | Acrylic acid | 13.4 |
| 6 | n-Butyl acrylate | 120.0 |

I Dissolve 2 and 3 in 1 in a suitable flask.
II Add 10% of a mixture of 4, 5, 6. Raise the flask contents temperature to 88°C.
III Add rest of monomers over 70 minutes.
IV Hold reactor contents at 88°C for a further 30 minutes.
V Cool. Solids content is about 40%.

After addition of suitable wetting solvent a 75 μm wet coating on a pure polypropylene plaque was oven dried for 30 minutes at 80°C. The adhesion of this was assessed as Gt-0.

Example 6

A coating composition according to the invention was prepared according to the following recipe in which an aqueous emulsion of a polymer P (olefinic free-radical addition type) is prepared in the presence of a preformed polymer, also within the definition for P, but of the urethanic type, and with the additional feature that the urethanic polymer P is prepared in the presence of the monomer used for forming the olefinic polymer P which is not free-radical polymerised until after the polyurethane has been formed by the sequence of prepolymer formation, dispersion into water (using the base triethylamine for neutralising carboxyl groups on the

prepolymer to render the polyurethane prepolymer water-dispersible) and chain-extension (using the polyamine triethylene tetramine).

A polyurethane prepolymer system was first prepared using the following recipe.

| No | Component | Weight (gms) |
|---|---|---|
| 1 | Isophorone diisocyanate | 216.00 |
| 2 | "Desmodur" N3300* | 24.00 |
| 3 | Dimethylol propionic acid | 9.60 |
| 4 | Nonionic stabiliser | 40.80 |
| 5 | Polypropylene glycol 1025 | 188.20 |
| 6 | Polypropylene glycol 2025 | 1.40 |
| 7 | Isoborneol (for incorporating ONB groups) | 189.00 |
| 8 | Dibutyltinlaureate (catalyst) | 0.067 |
| 9 | " | 0.067 |
| 10 | " | 0.067 |
| 11 | Hydroquinone | 0.067 |
| 12 | Isobornylacrylate (does not react in the prepolymer formation but may act as a solvent) | 109.9 |

* a triisocyanate of formula:

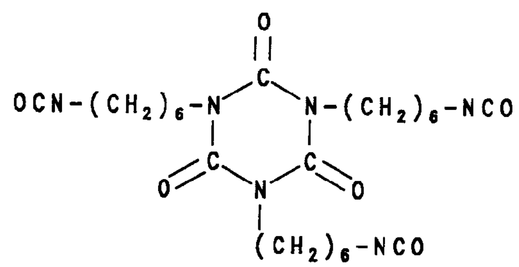

Components 1 to 8 inclusive and 11 and 12 are added to a suitably sized reactor, the temperature raised to 95°C and held there for 60 minutes before adding 9. After a further 60 minutes at 95°C, 10 is added, and the temperature held at 95°C until there is a residual NCO content of between 1.6 and 2.25%, using extra dibutyltinlaureate as necessary.

The polyurethane prepolymer is then dispersed into water and chain extended, and the isobornyl acrylate is then free-radical polymerised, according to the following recipe.

| No | Component | Weight (gms) |
|---|---|---|
| 1 | Prepolymer system (as prepared supra) | 350.00 |
| 2 | Triethylamine | 3.50 |
| 3 | "Antorax" CO630 (nonionic surfactant) | 10.50 |
| 4 | Demin water | 495.30 |
| 5 | Triethylenetetraamine | 6.50 |
| 6 | Demin water | 25.00 |
| 7 | Ammonium persulphate | 0.35 |
| 8 | Demin water | 31.50 |

Components 3 and 4 are placed in a suitably sized reactor equipped with an efficient stirrer. To this is added (at room temperature) a blend of 1 and 2 over a period of 45-60 minutes in order that an aqueous dispersion (emulsion) of the polymer is obtained. 5 and 6 are then added to the dispersion, which is then stirred for a further 60 minutes. 7 and 8 are then added and the temperature raised to 85°C for 45 minutes before cooling and filtering the polymer emulsion (solids content ca. 30%) to remove oversize material.

A coating of the resulting aqueous polymer composition on a pure polypropylene plaque was effected (no wetting solvent being necessary) (75 μm wet) and dried for 1 hour at 80°C. The adhesion of the coating was rated at Gt-0.

Example 7

Coating compositions were prepared, one being according to the invention using the monohydroxyfunctional isoborneol, and the other not according to the invention using n-butanol. The invention composition was comprised of an aqueous emulsion, of only a single polymer P (polyurethanic type; i.e. no other polymer P, or a polymer Q, being present).

Polyurethane prepolymers A and B were first prepared using the following recipes.

| No | Component | Weight (gms) A | Weight (gms) B |
|---|---|---|---|
| 1 | Isophorone diisocyanate | 157.5 | 157.5 |
| 2 | "Desmodur" N3300 | 17.5 | 17.5 |
| 3 | Dimethylol propionic acid | 7.0 | 7.0 |
| 4 | Nonionic stabiliser | 29.75 | 29.75 |
| 5 | Polypropylene glycol 1025 | 1.3 | 1.3 |
| 6 | Polypropylene glycol 2025 | 137.2 | 137.2 |
| 7 | n-Butanol | 71.3 | - |
| 8 | Isoborneol (for incorporating ONB groups) | - | 133.1 |
| 9 | Toluene | 105.3 | 120.8 |
| 10 | Dibutyltinlaureate (catalyst) | 0.035 | 0.035 |
| 11 | " | 0.035 | 0.035 |
| 12 | " | 0.035 | 0.035 |
| 13 | " | 0.035 | 0.035 |

Components 1 to 9 inclusive are added to a suitably sized reactor and mixed for 5 minutes, before addition of component 10. The temperature of the reactor contents is then raised to 95°C. After 45 minutes, component 11 is added. After a further 45 minutes, component 12 is added, and after another 30 minutes component 13 is added. Reaction at 95°C is continued so that there is a residual NCO content of between 1.4 and 1.8%, using extra dibutyltinlaureate as necessary.

The polyurethane prepolymers A and B are then dispersed into water and chain extended according to the following recipes.

| No | Component | Weight (gms) C | D |
|---|---|---|---|
| 1 | Prepolymer A (as prepared supra) | 450.0 | - |
| | Prepolymer B (as prepared supra) | - | 450.0 |
| 2 | Triethylamine | 4.4 | 3.9 |
| 3 | "Akyporox" OP 250V * | 12.8 | 12.8 |
| 4 | "Atlas" G4809 # | 10.3 | 10.3 |
| 5 | Demin.water | 450.0 | 450.0 |
| 6 | Triethylenetetramine | 5.9 | 5.9 |
| 7 | Demin.water | 50.0 | 50.0 |

* Anionic surfactant available from Chemy

\# Nonionic surfactant available from ICI Specialty Chemicals

Components 3, 4 and 5 are placed in a suitably sized reactor equipped with an efficient stirrer. To this is added (at room temperature) a blend of 1 and 2 over a period of 45-60 minutes in order to obtain aqueous dispersions (emulsions) of the polymers. 5 and 6 are then added to the dispersions (polymer emulsions, solids content ca. 28%) which are then stirred for a further 60 minutes.

Coatings of the resulting aqueous polymer compositions on pure polypropylene plaques were effected (no wetting solvent being necessary) (75 μm wet) and dried for 1 hour at 80°C. The adhesion of the coating derived from C (using n-butanol) was rated as Gt-5; that derived from D (according to the invention) was rated as Gt-2.

## Example 8

A coating composition according to the invention was prepared according to the following recipe in which an aqueous emulsion of a polymer P of the olefine free radical addition type is prepared.

| No | Component | Weight (grams) |
|---|---|---|
| 1 | Water (demin) | 1142.9 |
| 2 | Surfagene faz109v* | 2.1 |
| 3 | Sodium bicarbonate | 0.7 |
| 4 | Ammonium persulfate | 0.8 |
| 5 | Water (demin) | 82.0 |
| 6 | Ammonium persulfate | 0.3 |
| 7 | Water (demin) | 6.3 |
| 8 | Water (demin) | 79.8 |
| 9 | "Surfagene" faz109v* | 6.2 |
| 10 | Sodium bicarbonate | 0.3 |
| 11 | Lauryl mercaptan | 2.7 |
| 12 | Methyl methacrylate | 100.0 |
| 13 | Isobornyl acrylate | 100.0 |
| 14 | Ethyl acrylate | 83.4 |
| 15 | Methacrylic acid | 50.0 |
| 16 | Water (demin) | 42.5 |

* "Surfagene" faz109v is a surfactant consisting of phosphate mono and diesters of alkylphenolethoxylates from Gafac.

Components 1-3 are placed in a reactor fitted with a stirrer, baffles, condenser and thermometer. Components 8-15 are charged to a monomer feed tank and this feed is pre-emulsified by stirring the feed tank until a stable emulsion is obtained.

Components 4-5 are charged to an initiator feed tank and the pH of this solution raised to 8 by adding a few drops of $NH_4OH$ solution (25%). The reactor contents are heated to 85°C and a mixture of 6-7 and 5% of the pre-emulsioned feed is charged. After 5 minutes, addition of the remaining monomer is begun and it is steadily added over 80 minutes. Simultaneously the initiator feed is added over a period of 90 minutes. The rinse water 16 is added and the system kept at 85°C for another 30 minutes. The resulting aqueous emulsion (solids content ca. 20%) is cooled and sieved to remove oversize material.

The aqueous coating composition was applied to a polypropylene plaque as described supra and the adhesion was assessed as GT1.

Aqueous emulsion resulting from this example was also converted into an aqueous alkaline solution by the addition of 1 equivalent of $NH_3$ (by the addition of an $NH_4OH$ solution (25%)). This solution is suitable for application to oriented polypropylene film (optionally corona treated) to give a highly transparent coating. Adhesion to the film was assessed by a variant of the Gitterschnitt Test in which the cellulosic tape is firmly applied to the coated film and pulled away at an angle of 90°. In this test no coating was removed from the film.

Examples 9, 10 (Comparative) and 11

Coating compositions were prepared in Examples 9 (according to the invention) and 10 (not according to the invention) according to the following recipes in which an aqueous emulsion of a polymer of the olefinic free radical type is prepared in the presence of a performed aqueous solution of a polymer Q also of the free radical olefinic addition type.

| No | Component | Weight in grams Example 9 | Example 10 |
|---|---|---|---|
| 1 | Water (demin) | 868.7 | 868.7 |
| 2 | "Joncryl" 678* | 291.0 | 291.0 |
| 3 | NHOH (25% in water) | 72.6 | 72.6 |
| 4 | Octyl phenol polyglycol ether# | 24.3 | 24.3 |
| 5 | Ammonium persulfate | 1.7 | 1.7 |
| 6 | Water (demin) | 18.2 | 18.2 |
| 7 | Isobornyl acrylate | 523.8 | - |
| 8 | Methyl methacrylate | - | 523.8 |
| 9 | Ethylhexyl acrylate | 58.2 | 58.2 |
| 10 | Ammonium persulfate | 3.2 | 3.2 |
| 11 | Water (demin) | 76.9 | 76.9 |
| 12 | Water (demin) | 40.3 | 40.3 |

* Alkaline soluble low molecular weight polymer based on styrene, α methyl styrene and acrylic acid and commercially available from S.C. Johnson.

# Surfactant containing 25 ethylene oxide units.

Components 1 to 3 are added to a reactor equipped with stirrer, baffles, condenser and thermometer, and mixed while heating until 2 has dissolved. Components 4 to 6 are added and heating is continued up to 85°C. Component 7 to 9 are placed in a monomer feed tank and Components 10, 11 placed in an initiator feed tank. At a reaction temperature of 85°C, the monomers are steadily added over a period of 110 minutes (to form a polymer P in Example 9, and a polymer lacking ONB groups in Example 10). After completing the addition, the rinse water 12 is added and the reactor contents kept at 85°C for an additional 30 minutes. The resulting aqueous emulsion (solids content ca. 45%) is cooled and sieved to remove oversized material.

A composition, corresponding to Example 11 (solids content ca. 45%), was prepared using the recipe employed for Example 9 except that the Joncryl 678 was replaced by the aqueous solution prepared as described at the end of Example 8.

The aqueous coating compositions of Examples 9, 10 and 11 were applied to polypropylene plaques as described supra and the adhesion tests carried out - with the following results:

| | Example 9 | Example 10 | Example 11 |
|---|---|---|---|
| Gitterschnitt | Gt-0 | Gt-5 | Gt-0 |

Example 12 (Comparative)

In this example an attempt was made to prepare a coating composition similar to that made in Example 5, except that the monomer system used to make the polymer system in that example was replaced by 600g isobornyl acrylate, 53.3 g n-butyl acrylate and 13.4g acrylic acid (i.e. 90% by weight isobornyl acrylate based on the total amount of monomers used for making the polymer system). A usable coating composition (intended solids content ca. 40%) could not, however, be prepared due to the formation of large quantities of coagulated material.

Example 13 (Comparative)

In this example a solvent-based composition (in toluene solvent) of a polymer having the same overall composition as that employed in Example 3 (and in particular both being derived from a monomer system having 11% by weight of isobornyl acrylate) was prepared to show that, at comparable levels of ONB monomer, the aqueous-based composition of the invention surprisingly processes superior adhesion to polypropylene.

| No | Component | Weight (grams) |
|---|---|---|
| 1. | Toluene | 919.7 |
| 2. | n-Butyl acrylate | 151.2 |
| 3. | n-Butyl methacrylate | 361.2 |
| 4. | Isobornyl acrylate | 66.0 |
| 5. | Acrylic Acid | 21.6 |
| 6. | Benzoyl peroxide | 4.7 |
| 7. | Benzoyl peroxide | 4.7 |
| 8. | Benzoyl peroxide | 4.7 |
| 9. | Azobisisobuyronitrile | 3.8 |

Components 1 to 5 are mixed in a feed tank and 25% of this mixture is added to a reactor fitted with a condenser, stirrer and thermometer. Component 6 is added and the reactor contents heated to 75°C. The remainder of the monomer feed 1 to 5 plus component 7 are added over 60 minutes. Heating is continued up to 85°C and after 30 minutes component 8 is added. After a further 90 minutes, component 9 is added. The reaction mixture is kept at 85°C for an additional 60 mixture. The resulting solvent-based composition (solids content 40%) is cooled to room temperature.

The solvent-based composition was coated onto polypropylene plaques and dried as described in GB 1109746 and also as described above. Adhesion was assessed as Gt-5 in both cases.

## Claims

1. Aqueous coating composition suitable for application to a polyolefine substrate, which coating composition comprises an aqueous emulsion or solution of a polymer system comprising at least one polymer P which polymer system imparts polyolefine-adherability to a coating derived from the composition, wherein said polymer P is a polymer derived from a monomer system comprising at least one polymerisable monomer bearing an optionally substituted 7,7-dimethyl norbornanyl group where the amount of such a monomer(s) used for the preparation of said polymer P is within the range of from 5 to 100 % by weight, based on the weight of all the monomer(s) used in the preparation of said polymer P, provided that the amount of such a monomer(s) based on the weight of all the monomers used for the preparation of said polymer system is within the range of from 5 to 80 % by weight.

2. Aqueous coating composition according to claim 2 wherein said at least one polymer P is selected from polymers of olefinically unsaturated monomers, urethane polymers and polyester polymers.

3. Aqueous coating composition according to either claim 2 or claim 2 wherein said at least one polymer P is or includes a free radical addition polymer of one or more olefinically unsaturated monomers, at least one of which is an olefinically unsaturated monomer bearing an optionally substituted 7,7-dimethyl norbornanyl group.

4. Aqueous coating composition according to claim 3 wherein said at least one olefinically unsaturated monomer bearing an optionally substituted 7,7-dimethyl norbornanyl group is a monomer of formula

$$H_2C = CR^1 - \overset{\overset{O}{\|}}{C} - XT$$

where $R^1$ is H or lower alkyl of up to 8 carbon atoms,
X is -O- or -NH- and T is an optionally substituted 7,7-dimethyl norbornanyl group.

5. Aqueous coating composition according to claim 4 wherein said at least one olefinically unsaturated monomer bearing an optionally substituted 7,7-dimethyl norbornanyl group is selected from isobornyl acrylate, isobornyl methacrylate, isobornyl acrylamide and isobornyl methacrylamide.

6. Aqueous coating composition according to any one of claims 3 to 5 wherein the level of monomer(s) bearing an optionally substituted 7,7-dimethyl norbornanyl group used for the preparation of said at least one polymer P is within the range of from 50 to 100 % by weight, based on the total weight of monomer(s) used for the preparation of P.

7. Aqueous coating composition according to either claim 1 or claim 2 wherein said at least one polymer P is or includes a urethane polymer in which the monomer bearing an optionally substituted norbornanyl group used in the preparation thereof is selected from isoborneol and borneol.

8. Aqueous coating composition according to any one of the preceding claims wherein a polymer P is the only polymer(s) in said polymer system, in which case the level of monomer(s) bearing an optionally substituted 7,7-dimethyl norborbanyl group used for the preparation of said polymer P does not exceed 80 weight % of the total monomeric material used in the preparation of said polymer P.

9. Aqueous coating composition according to any one of claims 1 to 7 wherein the polymer system of said composition includes at least one polymer Q, said polymer Q being derived from a monomer system in which the level of any polymerisable monomer bearing an optionally substituted 7,7-dimethyl norbornanyl group is less than 5% by weight based on the weight of the monomer(s) used for the preparation of said polymer Q.

10. Aqueous coating composition according to claim 9 wherein said polymer Q is derived from a monomer system which contains 0 % by weight of a polymerisable monomer bearing an optionally substituted 7,7-dimethyl norbornanyl group.

11. Aqueous coating composition according to either claim 9 or claim 10 wherein the weight ratio of said at least one polymer Q to said at least one polymer P in said polymer system is within the range of from 20/80 to 95/5.

12. Aqueous coating composition according to any one of the preceding claims wherein the level of monomer(s) bearing an optionally substituted 7,7-dimethyl norbornanyl group used in the preparation of the polymer system of said composition is within the range of 5 to 50 % by weight based on the weight of all the monomers used in the preparation of said polymer system.

13. Process for the preparation of an aqueous coating composition suitable for application to a polyolefine substrate, wherein said process comprises forming an aqueous emulsion or solution of a polymer system comprising at least one polymer P, which polymer system imparts polyolefine-adherability to a coating derived from the composition, wherein said at least one polymer P is a polymer derived from a monomer system comprising at least one polymerisable monomer bearing an optionally substituted 7,7-dimethyl norbornanyl group where the amount of such a monomer(s) used for the preparation of said polymer P is within the range of from 5 to 100 % by weight, based on the weight of all the monomer(s) used in the preparation of said at least one polymer P, provided that the amount of such a monomer(s) based on the weight of all the monomers used in the preparation of said polymer system is within the range of from 5 to 80% by weight.

14. Method of forming a coating on a substrate which method comprises applying an aqueous composition according to any one of claims 1 to 12 to a substrate and removing the aqueous carrier phase by natural or accelerated drying to form the coating.

15. Method according to claim 14 wherein the substrate comprises a polypropylene homo or copolymer.

16. A coating which has been derived from a coating composition according to any one of claims 1 to 12.

17. A coated substrate having a coating derived from an coating composition according to any one of claims 1 to 12.

18. A coated substrate according to claim 17 wherein the substrate comprises a polypropylene homo or copolymer.

European Patent Office

# EUROPEAN SEARCH REPORT

Application Number
EP 93 30 1355

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 020 125 (ROHM AND HAAS COMPANY)<br>* claims 1-9,12-15,17,18 *<br>* page 4, line 8 - page 5, line 11 *<br>* page 5, line 24 - page 6, line 2 *<br>* page 7, line 23 - page 8, line 6 *<br>* page 17, line 22 - page 18, line 2 *<br>* page 27, line 9 - line 19 * | 1-6,8-18 | C08J7/04<br>C09D5/02<br>C09D133/00<br>C09D167/00<br>C09D175/04 |
| A,D | GB-A-1 109 746 (HERCULES INCORPORATED)<br>* claims * | 1-6,8-18 | |
| A | EP-A-0 093 198 (OECE-INDUSTRIE CHIMICHE-S.P.A.)<br>* claims 1-6 * | 1,2,7 | |
| A | US-A-4 735 995 (CHETTIATH)<br>* claims 1,2,7,8 * | 1,2 | |

TECHNICAL FIELDS SEARCHED (Int. Cl.5 )

C09D
C08J

The present search report has been drawn up for all claims

| Place of search | Date of completion of the search | Examiner |
|---|---|---|
| THE HAGUE | 01 JUNE 1993 | HOLLENDER C.J.F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)